# EUROPEAN PATENT APPLICATION

(11) **EP 1 637 350 A2**
(43) Date of publication of application: **22.03.2006**
(21) Application number: 04256622.4
(22) Date of filing: 27.10.2004
(51) Int. Cl.: B44C 5/04, E04F 13/14, E04F 15/02

(54) **Tiles and floors**

(30) Priority: 03.06.2004 US 860083; 29.09.2004 GB 0421619
(71) Applicant: Listawood Holdings Limited, Fakenham, Norfolk NR21 2RE (GB)
(72) Inventor: Neely, Richard A., Indian Mound, Tennessee 37079 (US)
(74) Representative: Weitzel, David Stanley

(57) **Abstract**

Disclosed herein is a glass sheet comprising a first side, second side, a thickness, and an image positioned on the second side and viewable from the first side through the thickness of the glass sheet. The image is preferably a sublimated image and is positioned on the second side to provide a proper viewing of the image to a viewer through the first side of the glass sheet. The glass sheet can be large pieces or a plurality of smaller pieces positioned to relay an overall image to a viewer of the glass sheet. Exemplary uses of these glass sheets include floors and floor sections, walls, doors, and bathroom placement.

## Description

The invention relates to tiles and floors.

It is known to place images on substrates, such as floor tiles or wall tiles. There is a tendency for such images to become scratched and disfigured. It is known to coat the images and substrates with a protective layer to try to enhance the wearability and longevity of the images placed on these substrates. For example, U.S. Patent No. 4,452,604, U.S. Patent No. 5,188,876, U.S. Patent No. 4,232,076, U.S. Patent No. 6,025,023, U.S. Patent No. 6,482,285, U.S. Patent No. 6,000,793, and U.S. Patent No. 6,332,941 all disclose various conventional techniques of placing an image on a top exposed surface of a floor. These patents disclose placing the image on of surfaces made of materials that can be defaced, such as plastic. Several of these prior patents also try to protect the image through special coatings designed to provide enhanced wear characteristics.

However, all of these prior art attempts have shortcomings. For example, the exterior coatings added to protect the images themselves will wear out over time. Additionally, the chosen materials for the substrates have a tendency to wear, deform, scratch, and for the substrate itself and image contained thereon to be defaced.

In accordance with one aspect of the invention there is disclosed a floor comprising at least one transparent section having a bottom side, a top side, a thickness; and an image positioned on the bottom side and properly viewable through the thickness from the top side. The image is preferably a sublimated image and is positioned on the second side to provide a proper viewing of the image to a viewer through the first side of the transparent section.

In accordance with a second aspect of the invention there is provided a tile, comprising: a transparent substrate having a first side, a second side, a thickness; and a key coating on the second side for accepting a printed or sublimated image.

Once provided with a printed or sublimated image, the tiles can be used on floors, walls, countertops, splash backs in kitchens, and in swimming pools, and the like. Placing the images on the backs of the glass tiles overcomes longstanding problems. Namely, the ability to properly perceive the image and still maintain a high level of durability of the image on a floor or other exteriorly exposed surface. This is substantially accomplished by removing the image from the exposed surface which experiences the wear and contact with the elements and the users and placing it under the substrate.

The invention also extends to a method of manufacturing a tile, comprising forming a transparent substrate, coating the substrate with a key coating suitable for printing or sublimating an image onto or into the key coating.

Embodiments of the invention will now be described with reference to the accompanying drawings, in which:
Fig. 1 shows a glass tile embodying the invention;
Fig. 2(a) shows a front view of glass tile embodying the invention;
Fig. 2(b) shows a cross-sectional view of the tile of Fig. 2(a) along line 2B-2B;
Fig. 2(c) shows a back perspective view of the glass tile shown on Fig. 2(a);
Fig. 3 shows a front view of one embodiment of a floor embodying the invention;
Fig. 4 shows another floor embodying the invention having multiple transparent sections assembled to provide an image; and
Fig. 5 shows an example of a glass floor embodying the invention.

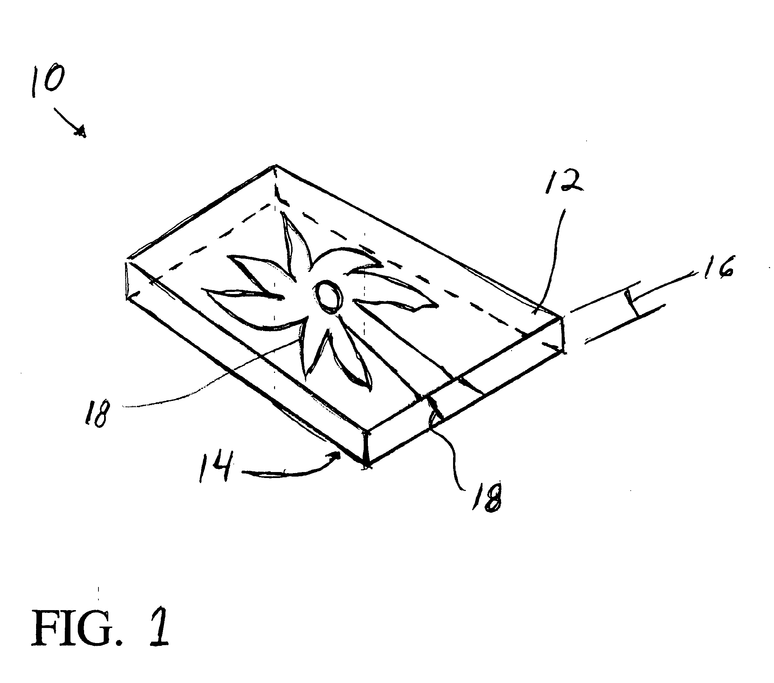

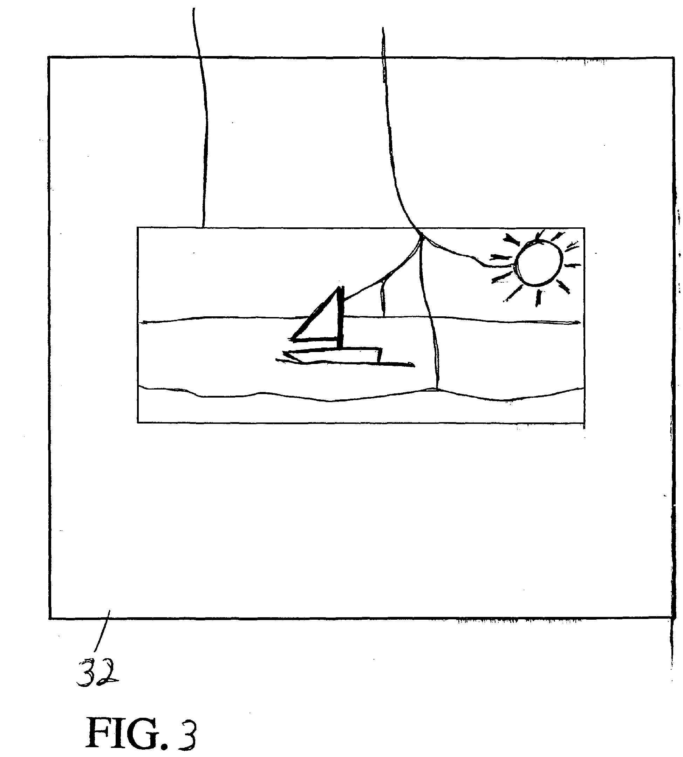

Referring generally now to Figs. 1-5, a transparent sheet in this case made from glass, is shown generally and designated by the numeral 10. The glass sheet comprises a first side 12, a second side 14, a thickness 16, and an image 18. The image 18 is positioned on the second side 14 such that a viewer not shown of the glass sheet 10 is able to view and comprehend the image 18 when viewing the glass sheet 10 from the first side 12. The image 18 is viewable through the thickness 16 of the glass sheet 10.

To apply the image to the sheet 10, the second side 14 is given a key or receptor coating and the image is then printed onto or sublimated into the key coating. A suitable key coating for inkjet printing the image is gelatin based, PVA based, or water-born polymer suitable for non-porous substrates (glass). In the case of inkjet printing an opaque usually white layer is then applied over the printed image, e.g. by printing, screen printing for example, or as a vinyl laminate.

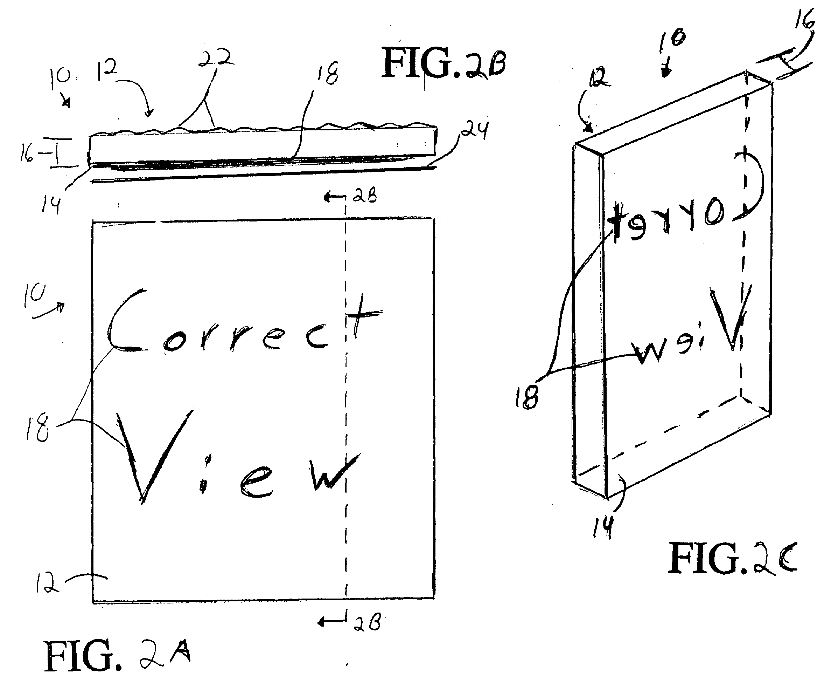

A suitable key or receptor coating for sublimating the image is clear polyurethane or polyester lacquer or a cross linked epoxy based material, which may be applied by screen printing or by spray. In the case of sublimating the image, an opaque usually white layer is preferably applied over the keycoating first and the image is then sublimated through the opaque layer into the keycoating. A suitable material is for the opaque coating is the same polyurethane or polyester lacquer or epoxy material, containing a white pigment, e.g. titanium dioxide, which may also be applied by screen printing or spray. The use of a single, pigmented, coating is possible but leads to a diffuse, less clear, image being visible through the sheet. The sublimated image 18 is orientated and positioned on the second side 14 such that it is properly viewable through the thickness 16, as best illustrated in Figs. 2a-2c.

In one embodiment the glass sheet 10 is a tile which may be used as boundary for a washing facility, shower cubicle, bath wall, bath floor, bath tub, accent tiles in a bathroom, and the like. The glass tile is attached to a wall wherein the second side 14 is positioned proximate to the wall such that the image 18 is protected from the environment in which the wall is located.

In another embodiment, a floor 20 has at least one glass section 10 in the form of a tile, having a bottom side 14, a top side 12 and a thickness 16. The glass section 10, includes an image 18 positioned on the bottom side 14, the image 18 which is properly viewable through the thickness 16 from the top side 12. Preferably the glass section 10 includes a sublimated image 18. Additionally, in a most preferred embodiment, the top side 12 includes a texture 22 that has a coefficient of friction greater than .40. This texture 22 facilitates walking on the floor 20 by a user of the floor 20. Additionally, the glass section 10 includes a backing material 24 positioned on the bottom side 14 to increase the visibility of the sublimated image 18. This backing material is preferably white in order to enhance the image 18, but can be any color desired. In the case of a floor the glass section is preferably tempered before the key coating is applied, so as be more robust and shatter proof.

Also, most preferably, the floor 20 lacks any wear resistant layer or coating positioned on or proximate to the top side 12. Preferably, there is no need for the wear-resistant layer due to the wear characteristics of the glass section 10 and the positioning of the sublimated image on the bottom side 14 away from traffic on the floor 20.

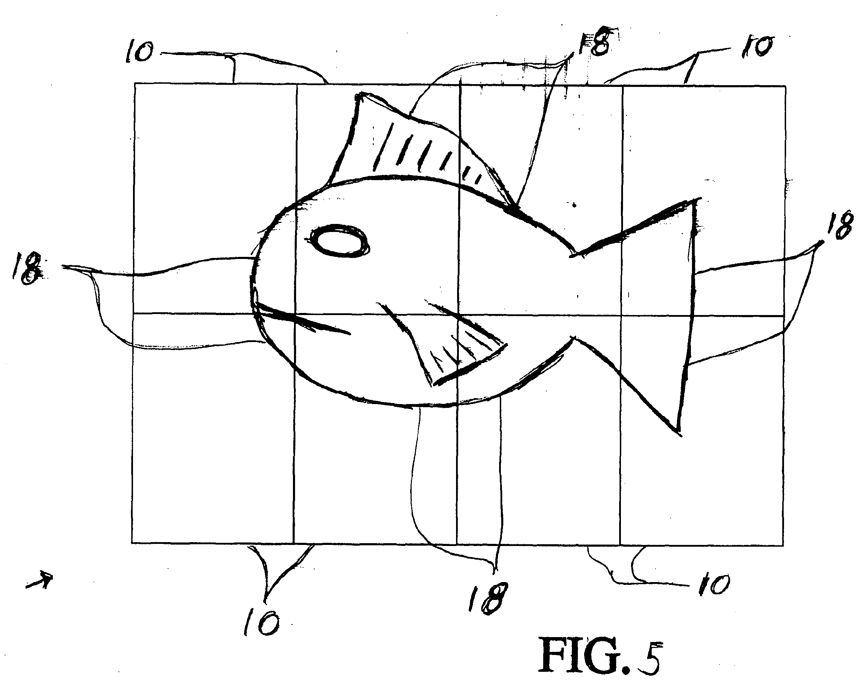

As shown in Fig. 5, a floor 30 comprises a plurality of glass sections, in the form of tiles 10, where each glass section 10 includes an exposed side 12, an unexposed side 14 and a thickness 15. Additionally, an image 18 is sublimated on the unexposed side 14 and viewable through the thickness 16 from the exposed side 12. In the case of floor tiles, any that need to be cut to fit, e.g. at edges, are not tempered since that would make it impossible to cut them.

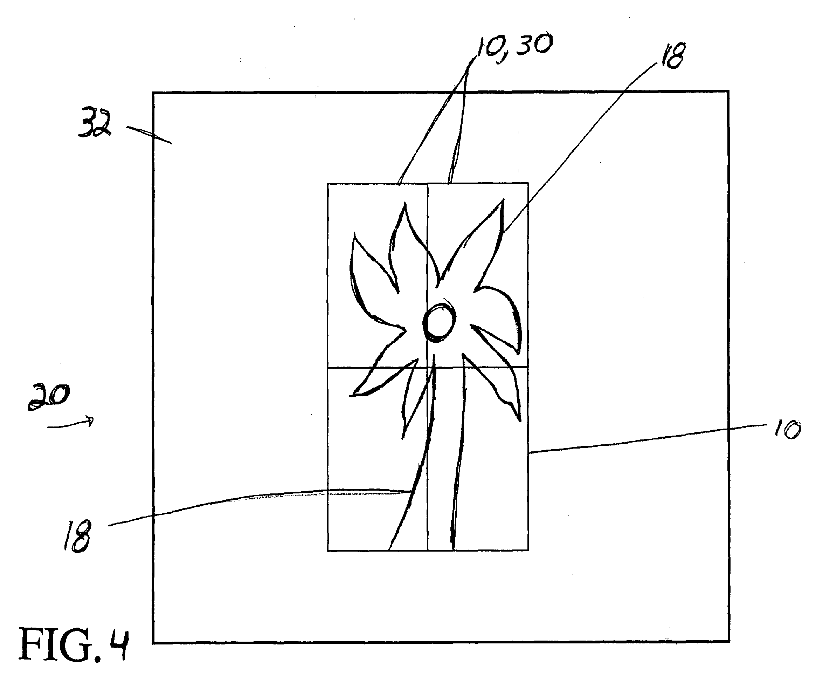

Additionally, the sublimated images on the proximately positioned glass sections 10 combine to create an overall sublimated floor image as illustrated in Figs. 4 and 5. The glass floor 30 can include a border 32, or boundary 32, comprised of other materials providing strength and structure to the glass floor 30. As such the combination of the glass floor 30 and the border 32 could create an overall floor 20 having glass sections 10 with a sublimated image 18. As such the floor 20 and glass floor 30 include the positioning of the unexposed sides 14 containing the sublimated images opposite any user interaction with the glass floor 30, or floor 20.

The tiles are produced as large sheets of float glass which, while still hot, are run through calendar rollers one of which is patterned to give the texture. The sheet is then cut into tiles and tempered to improve strength. The key coat is then applied, printed and the opaque layer applied, or the keycoat is applied followed by the opaque layer and the image is sublimed through the opaque layer into the key coat. The tiles may be supplied as an intermediate product having a keycoat ready for printing, e.g. by ink jet printer, or having a keycoat ready for an image to be sublimated. In the latter case, the key coat is preferably also covered by an opaque layer through which the image may be sublimated. Multiple images may be applied before the large sheet is cut.

In a most preferred embodiment the glass used as the glass sheets 10 or glass sections 10, meet ANSI and ASTM standards for commercial wall and floor applications. The glass sheets 10 pass freeze-thaw testing and resist chemical substances, such as common household and cleaning materials, swimming pool chemicals, hydrochloric acid solution, and potassium hydroxide. Additionally, the glass surface has a coefficient of friction that exceeds OSHA standards and a breaking strength that surpasses floor standards by more than 700 percent. Additionally, the glass includes UV inhibitors embedded within the glass to provide fade protection of the image 18 and the glass is a quarter of an inch thick.

The glass has the following results based on test performed by the Tile Council of America:
ASTM C1026: Tiles showed NO evidence of freeze-thaw damage after completing 15 cycles of freeze-thaw.
ASTM C1028: Static coefficient of friction
Dry = .86
Wet = .52
ASTM C373: Water absorption rate of .37% = impervious
ASTM C650: Resistance to chemical substances

Not affected by the following: Acetic acid 3% & 10%; Ammonium chloride, 100 g/L; Citric acid solution, 30 g/L & 100 g/L; Lactic acid, 5%; Phosphoric acid, 10%; sulfamic acid, 3% & 10%; Swimming Pool Chemicals = Sodium hypochlorite solution, 20 mg/L; Acids & Bases = Hydrochloric acid solution, 3% & 18%; Potassium hydroxide, 30 g/L & 100 g/L
ASTM C485: Warpage of Tile
Edge warpage: -.02%;
Diagonal warpage: 0.00%
ASTM C499: Facial dimensions and thickness of tile
Average difference of 0.020 inches
ASTM C502: Wedging of Tile
Average percent wedging was 0.03%
ASTM C648: Average breaking strength is 1.931 Ibf
Mohs' Scratch Hardness: 5 1-talc to 10-diamond

## Claims

1. A floor comprising
at least one transparent section having a bottom side, a top side, a thickness; and
an image positioned on the bottom side and properly viewable through the thickness from the top side.

2. A floor as claimed in claim 1, wherein the transparent section is a glass section.

3. A floor as claimed in claim 2, wherein the glass section is a glass tile.

4. A floor as claimed in any preceding claim, wherein the top side is textured to facilitate walking on the floor.

5. A floor as claimed in claim 4, wherein the textured top side has a coefficient of friction greater than 0.40.

6. A floor as claimed in any preceding claim, wherein the bottom side has a key coating onto which the image is printed or into which the image is sublimated.

7. A floor as claimed in claim 6, further including a backing material positioned on the bottom side to increase the visibility of the image.

8. A glass floor as claimed in any preceding claim, including a plurality of the glass sections.

9. A glass floor as claimed in claim 8, wherein the wherein the glass sections are glass tiles proximately positioned.

10. A glass floor as claimed in claim 8 or 9, wherein the images combine to create an overall floor image.

11. A tile, comprising: a transparent substrate having a first side, a second side, a thickness; and a key coating on the second side for accepting a printed or sublimated image.

12. A tile as claimed in claim 11, including a printed or sublimated image positioned on the second side and viewable from the first side through the thickness of the glass.

13. A tile as claimed in claim 11 or 12, in which the substrate is glass.

14. A method of manufacturing a tile, comprising forming a transparent substrate, and coating the substrate with a key coating suitable for printing or sublimating an image onto or into the key coating.

15. A method as claimed in claim 14, wherein the image is printed and an opaque coating is applied over the printed key coating to render the image more readily visible.

16. A method as claimed in claim 14, wherein an opaque coating is applied over the key coating, and the image is sublimated through the opaque coating into the keycoating.

17. A method as claimed in any of claims 14 to 16, wherein a plurality of images are printed onto or sublimated into the key coating and the substrate is later divided into a plurality of tiles.

18. A method of creating a floor comprising:
a) providing a plurality of transparent floor pieces
b) forming an image on one side of the transparent floor pieces wherein the image is properly viewable through the transparent floor pieces
c) positioning the transparent floor pieces proximate each other.

19. A method as claimed in claim 18, further including positioning a backing material proximate to the image to increase the visibility of the image.
